# EUROPEAN PATENT APPLICATION

(11) **EP 1 643 672 A2**
(43) Date of publication of application: **05.04.2006**
(21) Application number: 05256093.5
(22) Date of filing: 29.09.2005
(51) Int. Cl.: H04L 1/00, H04L 1/16

(54) **Method and apparatus for transmitting wireless data by changing transmission rate dynamically**

(30) Priority: 02.10.2004 KR 2004078535
(71) Applicant: Samsung Electronics Co., Ltd., Suwon-si, Gyeonggi-Do (KR)
(72) Inventor: Kwon, Chang-yeul, Bundang-gu Seongnam-si, Gyeonggi-do (KR); Yang, Chil-youl, Yongin-si, Gyeonggi-do (KR); Yun, Suk-jin, Seocho-gu, Seoul (KR)
(74) Representative: Robinson, Ian Michael

(57) **Abstract**

A method for transmitting a wireless data, including: (a) transmitting first data frames of the wireless data at a first transmission rate; (b) storing results of retransmissions of the first data frames in a first window array; (c) determining a second transmission rate; and transmitting the second data frames.

## Description

The invention relates to wireless data transmission.

As wireless communication technology has advanced, many technologies for transmitting wireless data at a high speed have been developed. However, in related art systems, when wireless data is transmitted at a high speed, much of the wireless data may be lost, or data throughput may be sharply decreased, depending on a wireless channel state.

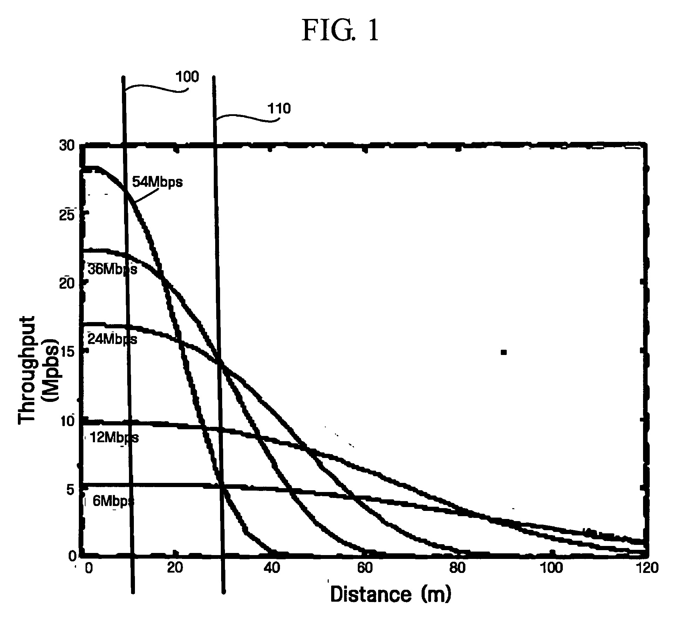

For example, Figure 1 shows a throughput of wireless data based on a distance from a data transceiver and a transmission rate.

In Figure 1, when a distance from a data transceiver is 10m (at a reference line 100), a throughput of data transmitted at a transmission rate of 54Mbps is higher than a throughput of a data transmitted at a transmission rate of 36Mbps or 24Mbps.

In contrast, when a distance from a data transceiver is 30m (at a reference line 110), a throughput of data transmitted at a transmission rate of 54Mbps is lower than a throughput of data transmitted at a transmission rate of 36Mbps, 24Mbps or even 12Mbps.

Thus, as shown in Figure 1, a problem arises in that a higher transmission rate does not always have a higher throughput depending on a wireless channel state.

An aim of the invention is to address the problems encountered in the conventional art.

According to the present invention there is provided an apparatus and method as set forth in the appended claims. Preferred features of the invention will be apparent from the dependent claims, and the description which follows.

The present invention relates to a method and apparatus for transmitting data frames by changing a transmission rate dynamically in such a manner that a wireless channel state is checked using information on the number of retransmitted frames in a wireless environment.

Preferably, the present invention is able to increase data throughput by changing a transmission rate dynamically, based on a wireless channel state, and selecting a certain transmission rate most proper to the current wireless channel state.

In one aspect of the invention there is provided a method for transmitting a wireless data, comprising (a) transmitting first data frames of the wireless data at a first transmission rate; (b) storing results of retransmissions of the first data frames in a first window array; (c) determining a second transmission rate; and (d) transmitting second data frames of the wireless data at the second transmission rate.

In another aspect of the invention there is provided an apparatus for transmitting a wireless data, comprising a first data transmission module for transmitting first data frames of the wireless data at a first transmission rate; a window array management module for generating a first window array, and for storing results of retransmissions of first data frames in the generated first window array; a transmission rate control module for determining a second transmission rate; and a second data transmission module for transmitting the second data frames at the second transmission rate.

The invention will become better understood with reference to the accompanying drawings which are given only by way of illustration and thus are not limitative of the invention, wherein;
Figure 1 is a graph of a throughput of wireless data based on a distance from a data transceiver and a transmission rate;
Figure 2 is a view illustrating a wireless data transceiver system according to an exemplary embodiment of the invention;
Figure 3 is a flow chart of a method for transmitting wireless data according to an exemplary embodiment of the invention;
Figure 4 is a view illustrating a process of controlling a transmission rate using a window array according to an exemplary embodiment of the invention;
Figure 5 is a flow chart of a method of transmitting wireless data according to another exemplary embodiment of the invention;
Figure 6 is a view illustrating a mechanism for transmitting a data frame by increasing a transmission rate according to an exemplary embodiment of the invention;
Figure 7 is a view illustrating a mechanism for transmitting a data frame by decreasing a transmission rate according to an exemplary embodiment of the invention;
Figure 8 is a block diagram illustrating the configuration of a link adaptation module according to an exemplary embodiment of the invention;
Figures 9A through 9C are graphs of the test results according to an exemplary embodiment of the invention; and
Figures 10A through 10C are graphs of the test results according to another exemplary embodiment of the invention.

Advantages and features of the invention and methods of accomplishing the same may be understood more readily by reference to the following detailed description of exemplary embodiments and the accompanying drawings. The invention may, however, be embodied in many different forms and should not be construed as being limited to the embodiments set forth herein. Rather, these embodiments are provided so that this disclosure will be thorough and complete and will fully convey the concept of the invention to those skilled in the art, and the invention will only be defined by the appended claims. Like reference numerals refer to like elements throughout the specification.

The invention is described hereinafter with reference to flowchart illustrations of methods according to embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

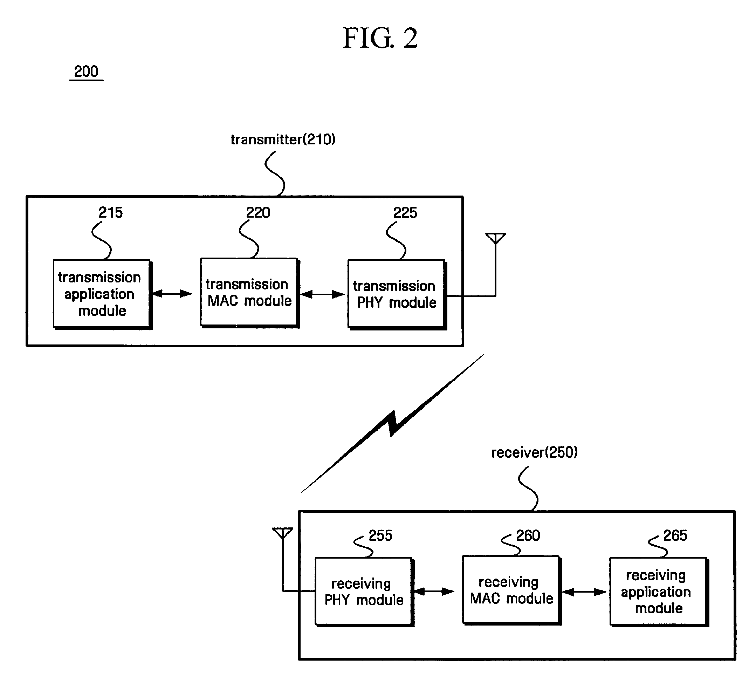

Figure 2 is a wireless data transmission and receiving system 200 according to an exemplary embodiment of the invention. Here, the terminal apparatus for performing wireless data transmission and receiving operations is designed to perform the functions of transmitting and receiving data. For simple descriptions, the terminal apparatus is classified into a transmitter 210 for transmitting wireless data, and a receiver 250 for receiving wireless data. The invention relates to a transmitter 210.

In view of the IEEE802.11 standard protocol, the transmitter 210 according to the invention performs a desired operation based on the protocol formed of an application layer, a medium access control layer (MAC layer), and a physical layer (Phy layer). The transmitter 210 and the receiver 250 include a module for performing an operation based on each layer. Thus, the transmitter 210 includes a transmission application module 215, a transmission MAC module 220, and a transmission PHY module 225, while the receiver 250 includes a receiving application module 265, a receiving MAC module 260, and a receiving PHY module 255.

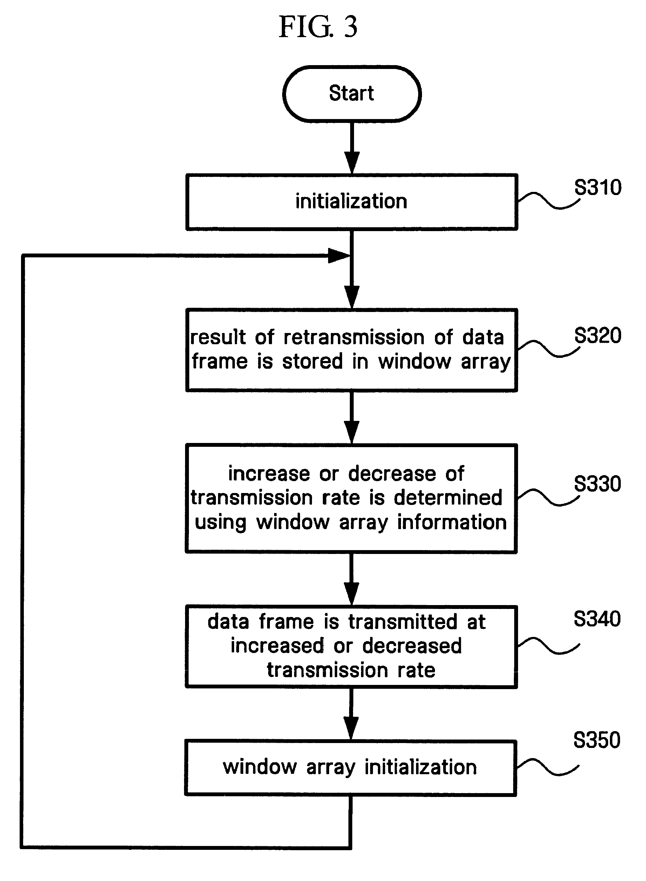

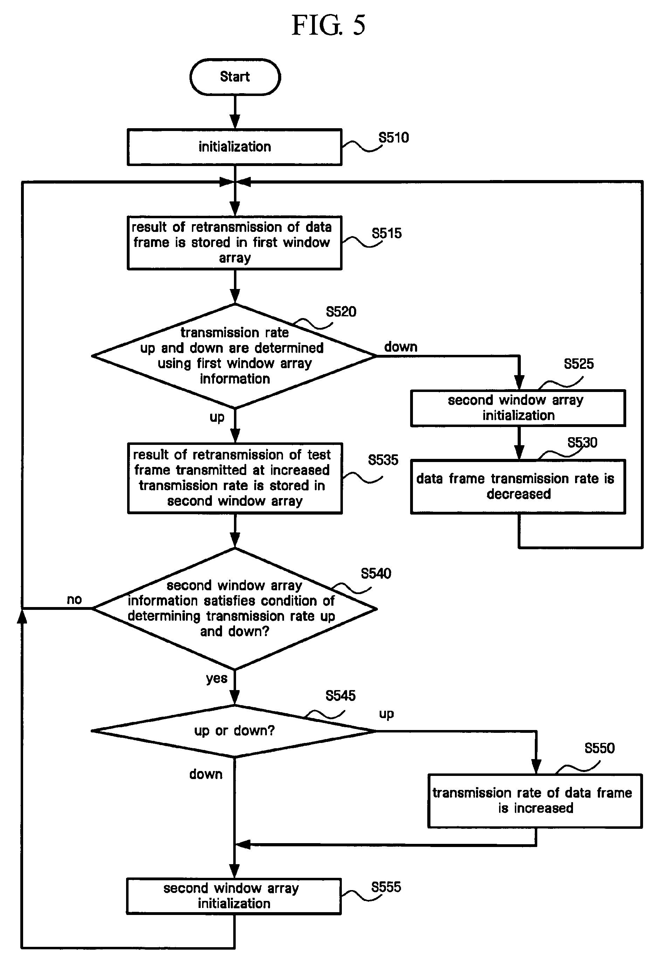

The operation of dynamically changing the transmission rate and transmitting the wireless data according to an exemplary embodiment of the invention is performed in the transmission MAC module 220 of the transmitter 210. The detailed operation of the same will be described later with reference to Figures 3 and 5.

The term 'module', as used herein, means, but is not limited to, a software or hardware component, such as a Field Programmable Gate Array(FPGA) or Application Specific Integrated Circuit(ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

Hereinafter, the module of performing a serial process of Figures 3 and 5 is referred to as a Link Adaptation Module for an easier description of the invention.

Figure 3 is a flow chart of a method of transmitting wireless data according to an exemplary embodiment of the invention.

When an application program for transmitting wireless data begins, the link adaptation module initializes the environment for changing the transmission rate dynamically according to the invention (S310).

For example, the array type data structure for storing a result of the retransmission of the data frame may be loaded in the memory, or the reference information for increasing or decreasing the transmission rate may be loaded in the memory, in table form. In order to check the retransmission state of the data frame, a certain module may be generated for judging an ACK frame or an NACK frame as a sub process or child process of the link adaptation module.

When the initialization process of the link adaptation module is finished, the data frame is transmitted, and the ACK or NACK frame with respect to the transmitted data frame is received. If the NACK frame is received, it means that the data frame is not normally transmitted, so that the data frame is retransmitted. At this time, it is indicated in the window array having an array type data structure that the data frame is retransmitted. Namely, in the case that the data frame has been retransmitted, the element of the window array is set to 1, and in the case that the retransmission is not performed, it is set to 0. A result of the retransmission of the data frame is stored in the window array in the size of the window array (S320). For example, in the case that a result of the retransmission with respect to 20 data frames is stored in the window array, the step S320 is repeatedly performed until 0 or 1 is set in 20 elements of the window array.

In the case that 0 or 1 is set in the elements by the previously determined number, it is judged whether the transmission rate is increased or decreased using the values set in the elements (S330). For example, when the value of 1 is filled in more than 10 elements of the 20 elements, the transmission rate may need to be decreased, and when the value of 1 is filled in less than 10 elements of the 20 elements, the transmission rate may need to be increased. The memory may store such a criterion with respect to each transmission rate in table form.

In the case that the transmission rate is determined to increase or decrease as a result of the step S330, the data frame is transmitted at the increased or decreased transmission rate (S340), and the window array is initialized again (S350).

As shown in Figure 3, it is possible to achieve a fast change of the transmission rate based on a wireless channel state.

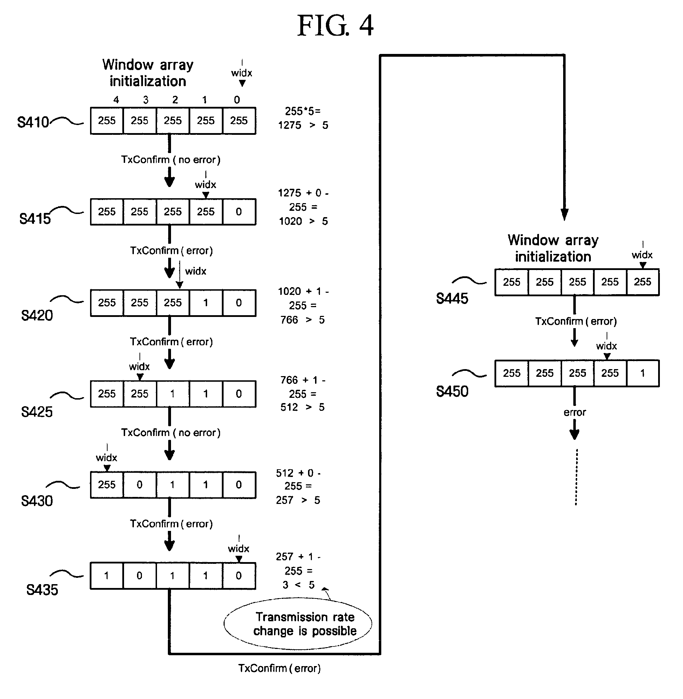

Figure 4 is a view illustrating a process of controlling a transmission rate using a window array formed of 5 elements, according to an exemplary embodiment of the invention.

When the window array is initialized, each element is set OxFF (S410). At this time, the sum of all five elements is 1275. "widx" represents a pointer indicating the element of the window array. "TxConfirm(parameter)" represents an interrupt or information message to the transmitter indicating that the transmitted data frame is either normally or abnormally received by the receiver. If the receiver has normally received the data frame, "parameter" is indicated as "no error", otherwise, it is indicated as "error".

In step S410, when the transmitter has transmitted the data frame to the receiver and has received "TxConfirm(no error)", the first element is set to 0, and "widx" indicates the next element (S415).

At this time, the sum of the elements is 1020. It is possible to determine whether the transmission rate should be increased or decreased only when all elements of the window array are set to 0 or 1. Accordingly, the step S320 is repeatedly performed, as shown in steps S415 through S435, until the sum of the elements becomes 5 or less.

In step S435, the sum of the values set in the elements of the window array becomes 3, and the transmission rate can be increased or decreased based on a comparison of this value to a reference value. In this embodiment, the reference value is set so that if: (1) the sum becomes 4 or 5, the transmission rate is decreased; (2) the sum becomes 1 or 2, the transmission rate is increased; and (3) the sum becomes 3, the transmission rate is maintained. Accordingly, in step S435, the transmission rate is maintained.

After it is determined whether the transmission rate should be changed, the window array is initialized again (S445), and the step S320 of Figure 3 is repeatedly performed.

Figure 5 is a flow chart of a method of transmitting wireless data according to another exemplary embodiment of the invention.

In order to transmit wireless data, when an application program begins, the link adaptation module initializes the environment for changing the transmission rate dynamically (S510) .

For example, the array type data structure for storing a result of the retransmission of the data frame or a test frame may be loaded in the memory, or the reference information for increasing or decreasing the transmission rate may be loaded in the memory, in table form. In order to check the retransmission state of the data frame or the test frame, a certain module may be generated for judging an ACK frame or an NACK frame as a sub process or child process of the link adaptation module.

When the initialization process of the link adaptation module is finished, the data frame is transmitted, and the ACK or NACK frame with respect to the transmitted data frame is received. If the NACK frame is received, it means that the data frame is not normally transmitted, so that the data frame is retransmitted. At this time, it is indicated in the first window array having an array type data structure that the data frame is retransmitted. Namely, in the case that the data frame has been retransmitted, the element of the first window array is set to 1, and in the case that the retransmission is not performed, it is set to 0. A result of the retransmission of the data frame is stored in the first window array (S515). For example, when a result of the retransmission with respect to 20 data frames is stored in the first window array, the step S515 is repeatedly performed until 0 or 1 is set in all 20 elements of the first window array.

When 0 or 1 is set in all of the elements and compared to a reference value, it is determined whether the transmission rate is increased or decreased (S520). For example, in the case that the value of 1 is filled in more than 10 elements of the 20 elements, the transmission rate may need to be decreased, and in the case that the value of 1 is filled in less than 10 elements of the 20 elements, the transmission rate may need to be increased. The memory may store such a criterion with respect to each transmission rate in table form.

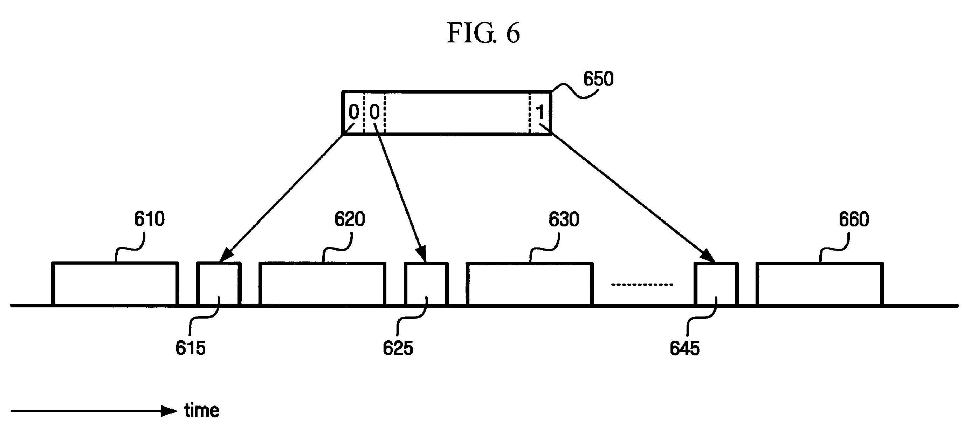

When it is determined that the transmission rate must increase as a result of the step S520, the data frame is transmitted based on the mechanism of Figure 6.

As shown in Figure 6, first window arrays are indicated with reference numerals 610, 620, 630 and 660, a second window array is indicated with reference numeral 650, and test frames are indicated with reference numerals 615, 625 and 645.

In the link adaptation module, when an analysis of the first window array 610 indicates that the transmission rate should be increased, a test frame 615 is transmitted at the increased transmission rate, and a result of the retransmission thereof is stored in the first element of the second window array 650 (S535). The test frame 615 may be a single data frame or different frame. In step S520, even if it is determined that the transmission rate should be increased, the data frames corresponding to the element information of the next first window array 620 are not transmitted at the increased transmission rate, but are transmitted at the same transmission rate as first window array 610.. A result of the retransmission of the test frame 615 is stored in an element of the second window array 650 in the same method as the result of the retransmission of the first frame in the element of the first window array 610. It is not necessary that the sizes of the first and second window arrays 610 and 650 are same.

In step S540, it is judged whether a condition, for determining whether the transmission rate should be increased or decreased by analyzing the second window array 650, is satisfied or not. Specifically, when the first window arrays 610, 620 and 630 satisfy the condition for increasing the transmission rate, and all retransmission results with respect to the test frames 615, 625 and 645 are recorded in all elements, the condition is satisfied. In the case that the above condition is not satisfied, the step S515 is repeatedly performed. When the condition is satisfied, it is judged whether the transmission rate of the data frame should be increased or decreased based on the information recorded in the second window array 650.

In the step S545, when it is judged that the transmission rate of the data frame should be increased, the data frames corresponding to the element information of the first window array 660 are transmitted at the increased transmission rate (S550), the second window array is initialized (S555), and the step S515 is repeatedly performed.

If it is judged that the transmission rate of the data frame should not be increased, the data frames corresponding to the element information of the first window array 660 are transmitted at the same transmission rate as first window arrays 610, 620 and 630, the second window array is initialized (S555), and the step S515 is repeatedly performed.

The method for judging whether the transmission rate of the data frame is increased or decreased using a result of the retransmission with respect to the test frame recorded in the element of the second window array 650 in the step S545 may be performed in the same method as the first window array.

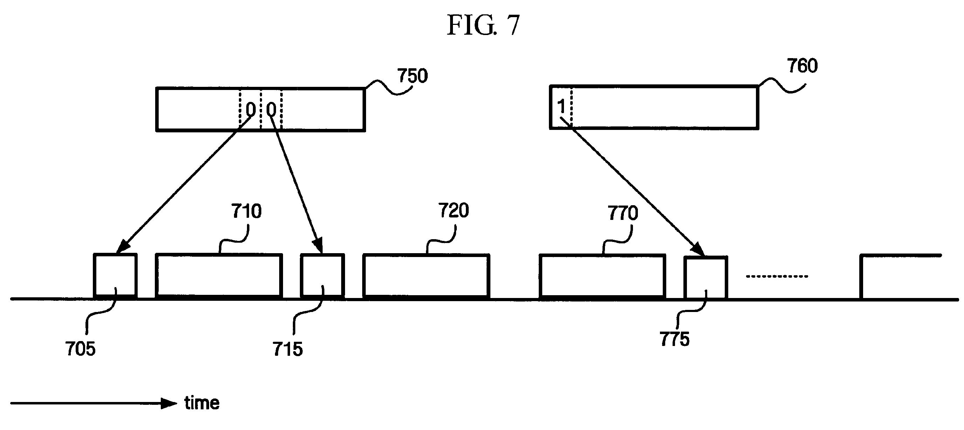

In the step S520, if it is determined that the transmission rate should be decreased, the data frames are transmitted based on the mechanism of Figure 7.

When second window array 750 is being updated with a result of the retransmission of test frames 705 and 715, and when it is determined that the transmission rate is decreased as a result of the confirmation of the retransmission recorded in the element of the first window array 720, the second window array 750 is initialized, and a new second window array 760 is generated (S520, S525).

The data frames corresponding to the element information of the first window array 770 are transmitted at the decreased transmission rate (S530), and the step S515 is repeatedly performed.

If it is determined that the transmission rate is increased again in the step S520 with respect to the first window array 770, a result of the retransmission with respect to the test frame 775 is recorded in a first element of the second window array 760. In the case that it is judged that the transmission rate is increased based on the information recorded in the element of the first window array, the second window array for confirming the state of the retransmission of the test frame is used. Otherwise, the data frame is transmitted at the decreased transmission rate, and the judging process based on the second window array is not performed.

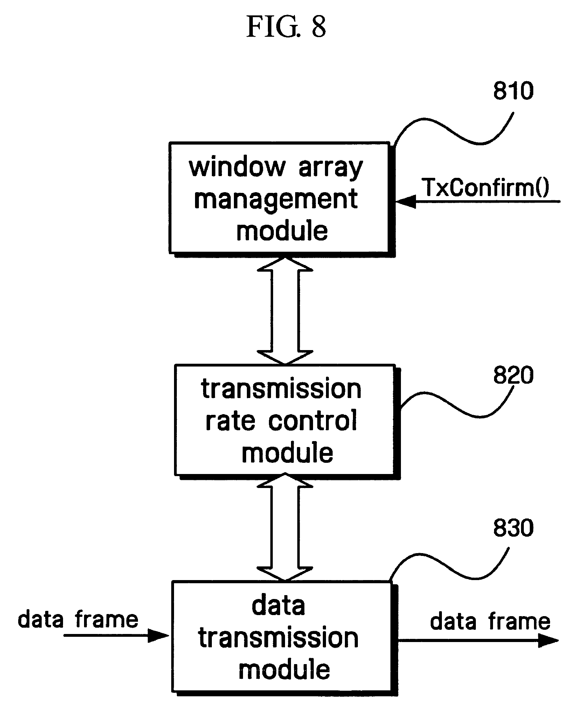

Figure 8 is a block diagram illustrating the configuration of the link adaptation module according to an embodiment of the invention, which performs the above described operations.

The link adaptation module includes a window array management module 810, a transmission rate control module 820, and a data transmission module 830.

The window array management module 810 generates an array type window array for storing a result of the retransmission of the data frame and stores a result of the retransmission of the data frame in the generated window array in accordance with "TxConfirm" interrupt or message. Thereafter, it is determined whether the transmission rate control module 820 changes the transmission rate of the data frame based on a result of the same. The data transmission module 830 transmits the data frame at the increased or decreased transmission rate in accordance with the determination of the transmission rate control module 820. At this time, in the case that the transmission rate control module 820 determines to increase the transmission rate, the data transmission module 830 increases the transmission rate as a result of the retransmission of the test frame transmitted at the increased transmission rate, and thereby transmitting the data frame. Since the detailed transmission rate change algorithm was described in the above, the descriptions thereof will be omitted.

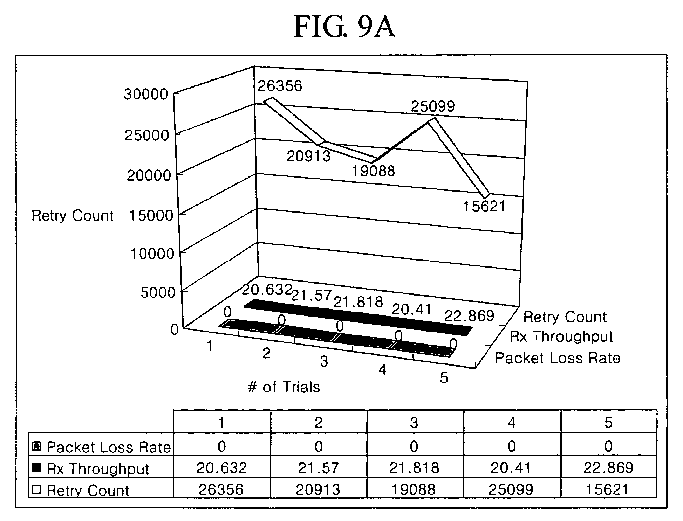

Figures 9A through 9C are graphs of test results according to exemplary embodiments of the invention. The test results are obtained when the channel states are relatively good.

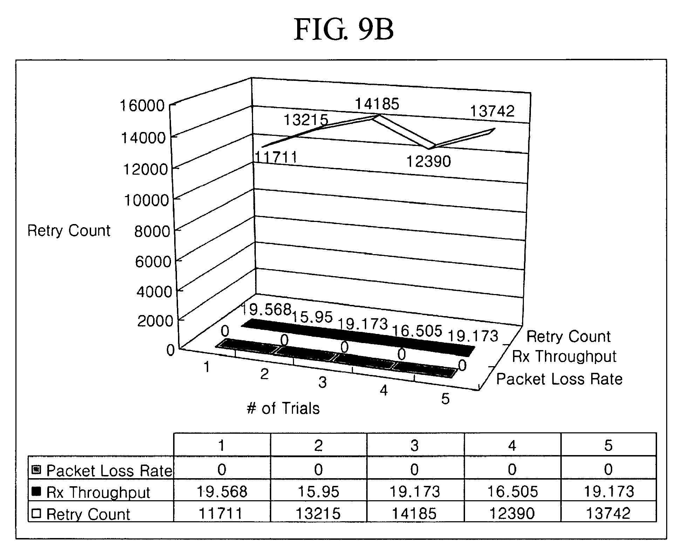

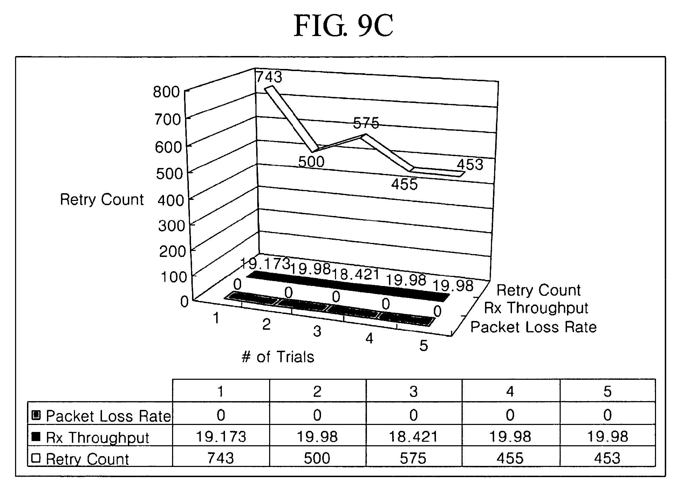

Figure 9A is a view of a result when the size of the window array is 5 based on the method of Figure 3, Figure 9B is a view of a result when the size of the window array is 20 based on the method of Figure 3, and Figure 9C is a view of a result when the size of the window array is 20 based on the method of Figure 5.

When the channel states are relatively good, as shown in Figures 9A through 9C, there are not many differences. Namely, the packet loss rate is 0%, and in the case of the Rx throughput, 19~22Mbps is maintained. In the case of the retransmission number (retry count), the result of Figure 9A is highest, followed by Figure 9B and Figure 9C in sequence. Namely, it is possible to decrease the number of the retransmissions of the data frame by changing the transmission rate dynamically in accordance with a size of window array.

As shown in Figure 9A, the Rx throughput is maintained at 21-22Mbps, and as shown in Figures 9B and 9C, it is maintained at 19Mbps, decreased by 2-3Mbps. In the former case, it means that the transmission is tried at a higher transmission rate, and in the later case, it means that the transmission is tried at a lower transmission rate. Therefore, a stable data frame transmission is achieved, maintaining a lower retransmission number (retry count).

In particular, as shown in Figures 9B and 9C, the later case is that the retransmission number (retry count) is 1/20 in maximum as compared to the former case. Namely, even when the Rx throughput is similar, the former case has used over bandwidth for the retransmission, but the later case has used only the necessary bandwidth for thereby preventing over consumption of the bandwidth.

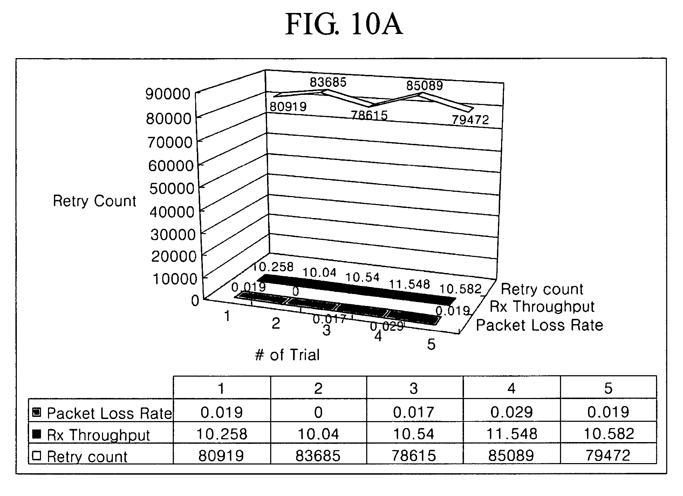

Figures 10A through 10C are graphs of test results according to another embodiment of the invention. The test results are obtained when the channel states are relatively bad.

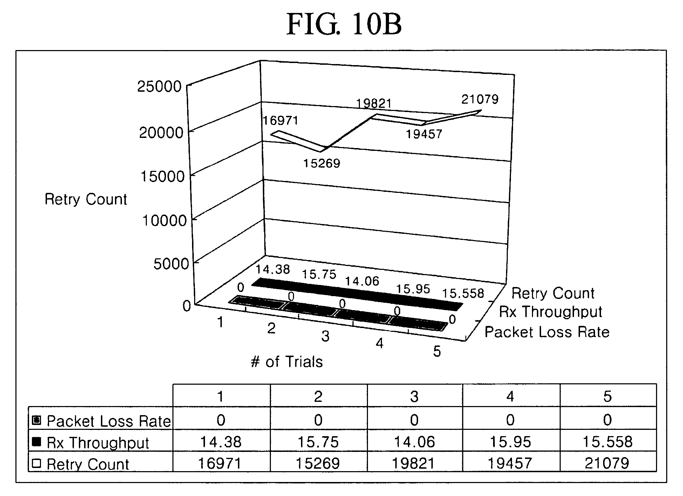

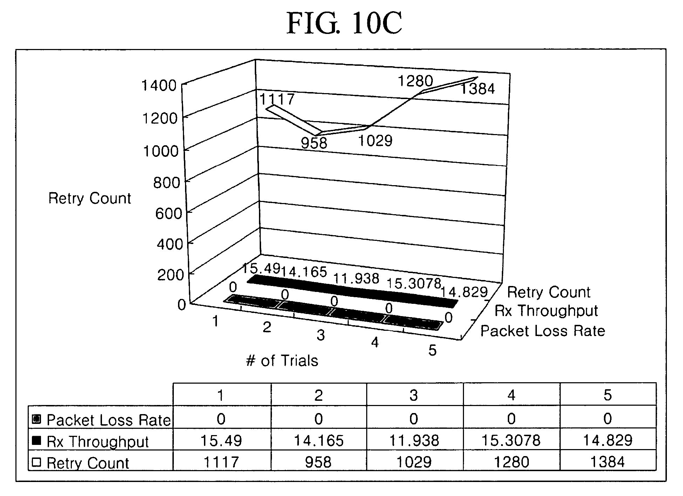

Figure 10A shows a result when the size of the window array is 5 based on the method of Figure 3, Figure 10B shows a result when the size of the window array is 20 based on the method of Figure 3, and Figure 10C shows a result when the size of the window array is 20 based on the method of Figure 5.

As shown in Figures 10A through 10C, the number of retransmissions is increased by about 2-4 times as compared with the result when the channel states are good as shown in Figures 9A through 9C.

In addition, as the size of the window array is small, the number of retransmissions is largely increased (four times in maximum), and as the size of the window array is large, the increased degree of the retransmission number is less than 2 times.

The Rx throughput is decreased as compared to the result of Figures 9A through 9C.

The small size of the window array represents many variations in the transmission rate. Namely, when the transmission rate is increased by short time thinking without enough sampling, the number of the retransmissions (retry count) is sharply increased in accordance with the increase of the transmission rate even though an unstable wireless environment is supplied, and the packet loss rate is increased. Namely, as shown in Figure 10A, the number of the retransmissions is maintained about 80,000 times, and as shown in Figure 10C, the number of the retransmissions is maintained about 1,000 times. As shown in Figure 10A, much bandwidth loss occurs as compared to Figure 10C.

As described above, it is possible to increase the data throughput by changing the transmission rate dynamically in accordance with the state of wireless channel.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for transmitting wireless data, comprising:
(a) transmitting first data frames of the wireless data at a first transmission rate;
(b) storing results of retransmissions of the first data frames in a first window array;
(c) determining a second transmission rate; and
(d) transmitting second data frames of the wireless data at the second transmission rate.

2. The method of claim 1, wherein the second transmission rate is determined based upon the results of the retransmissions of the first data frames stored in the first window array.

3. The method of claim 2, wherein the second transmission rate is determined by:
determining a number of the results of the retransmissions of the first data frames stored in the first window array that either show, or do not show, an error; and
comparing the determined number to a reference number.

4. The method of claim 2, wherein the second transmission rate is determined by:
determining a test second transmission rate based on the results of the retransmissions of the first data frames stored in the first window array;
transmitting test frames at the test second transmission rate while transmitting further first data frames at the first transmission rate;
storing results of retransmissions of the test frames in a second window array; and
determining the second transmission rate based on the stored results of the retransmissions of the test frames.

5. The method of claim 4, wherein determining the second transmission rate comprises:
determining a number of the results of the retransmissions of the test frames stored in the second window array that either show, or do not show, an error; and
comparing the determined number to a reference number.

6. The method of any preceding claim, further comprising initializing the first window array after determining the second transmission rate.

7. The method of claim 4, further comprising initializing the second window array after determining the second transmission rate.

8. The method of claim 4, wherein said first and second window arrays have data structures of variable sizes.

9. The method of any preceding claim, wherein the second transmission rate is determined by:
determining a test second transmission rate based on the results of the retransmissions of the first data frames stored in the first window array;
transmitting test frames at the test second transmission rate while transmitting further first data frames at the first transmission rate;
storing results of retransmissions of the test frames in a second window array;
determining a further test second transmission rate based on results of retransmissions of further first data frames stored in a further first window array, while transmitting the test frames;
when the further test second transmission rate is determined to be slower than the first transmission rate, initializing the second window array; and
transmitting the second data frames at the second transmission rate by decreasing the transmission rate.

10. The method of claim 9, wherein determining the second transmission rate comprises:
determining a number of the results of the retransmissions of the first data frames stored in the first window array that either show, or do not show, an error; and
comparing the determined number to a reference number.

11. The method of claim 9, wherein said first and second window arrays have data structures of variable sizes.

12. The method of any preceding claim, wherein (b) through (d) are implemented in a medium access control layer (MAC layer) according to IEEE802.11 standards.

13. An apparatus for transmitting wireless data, comprising:
a first data transmission module adapted to transmit first data frames of the wireless data at a first transmission rate;
a window array management module (810) adapted to generate a first window array, and for storing results of retransmissions of first data frames in the generated first window array;
a transmission rate control module (820) adapted to determine a second transmission rate; and
a data transmission module (830) adapted to transmit second data frames at the second transmission rate.

14. The apparatus of claim 13, wherein the second transmission rate is determined based upon the results of the retransmissions of the first data frames stored in the first window array.

15. The apparatus of claim 14, wherein the second transmission rate is determined by:
determining a number of the results of the retransmissions of the first data frames stored in the first window array that either show, or do not show, an error; and
comparing the determined number to a reference number.

16. The apparatus of claim 14, wherein the second transmission rate is determined by:
determining a test second transmission rate based on the results of the retransmissions of the first data frames stored in the first window array;
transmitting test frames at the test second transmission rate while transmitting further first data frames at the first transmission rate;
storing results of retransmissions of the test frames in a second window array; and
determining the second transmission rate based on the stored results of the retransmissions of the test frames.

17. The apparatus of claim 16, wherein determining the second transmission rate comprises:
determining a number of the results of the retransmissions of the test frames stored in the second window array that either show, or do not show, an error; and
comparing the determined number to a reference number.

18. The apparatus of claim 13, wherein the first window array is initialized after determining the second transmission rate.

19. The apparatus of claim 16, further the second window array is initialized after determining the second transmission rate.

20. The apparatus of claim 16, wherein said first and second window arrays have data structures of variable sizes.

21. The apparatus of claim 13, wherein the second transmission rate is determined by:
determining a test second transmission rate based on the results of the retransmissions of the first data frames stored in the first window array;
transmitting test frames at the test second transmission rate while transmitting further first data frames at the first transmission rate;
storing results of retransmissions of the test frames in a second window array;
determining a further test second transmission rate based on results of retransmissions of further first data frames stored in a further first window array, while transmitting the test frames;
when the further test second transmission rate is determined to be slower than the first transmission rate, initializing the second window array; and
transmitting the second data frames at the second transmission rate by decreasing the transmission rate.

22. The apparatus of claim 21, wherein determining the second transmission rate comprises:
determining a number of the results of the retransmissions of the first data frames stored in the first window array that either show, or do not show, an error; and
comparing the determined number to a reference number.

23. The apparatus of claim 21, wherein said first and second window arrays have data structures of variable sizes.

24. The apparatus of any of claims 13 to 23, wherein the window array management module (810), the transmission rate control module (820), and the second data transmission module (830) comprise a medium access control layer (MAC layer) according to IEEE802.11 standards.
